(19) Europäisches Patentamt

European Patent Office

Office européen des brevets

(11) **EP 1 287 382 B1**

(12) **EUROPEAN PATENT SPECIFICATION**

(45) Date of publication and mention
of the grant of the patent:
**30.08.2006 Bulletin 2006/35**

(51) Int Cl.:
*G01T 1/185* (2006.01)   *G01T 1/17* (2006.01)
*G01T 1/29* (2006.01)

(21) Application number: **01915484.8**

(22) Date of filing: **26.03.2001**

(86) International application number:
**PCT/GB2001/001307**

(87) International publication number:
**WO 2001/094977 (13.12.2001 Gazette 2001/50)**

(54) **IDENTIFYING RADIATION USING A PROPORTIONAL GAS COUNTER**

STRAHLUNGSIDENTIFIZIERUNG MIT HILFE EINES PROPORTIONALGASZÄHLERS

COMPTEURS DE GAZ PROPORTIONNELS

(84) Designated Contracting States:
**AT BE CH CY DE DK ES FI FR GB GR IE IT LI LU
MC NL PT SE TR**

(30) Priority: **09.06.2000 GB 0014096**

(43) Date of publication of application:
**05.03.2003 Bulletin 2003/10**

(73) Proprietor: **COUNCIL FOR THE CENTRAL
LABORATORY OF THE RESEARCH
COUNCILS
Warrington, Cheshire WA4 4AD (GB)**

(72) Inventors:
• BATEMAN, J. E.
Council Cent.Lab. Res. Councils
Daresbury,
Warrington WA4 4AD (GB)
• DERBYSHIRE G.
Council Cen. Lab. Res. Counsils
Daresbury,
Warrington WA4 4AD (GB)

(74) Representative: **Holmes, Matthew Peter et al
MARKS & CLERK,
Sussex House,
83-85 Mosley Street
Manchester M2 3LG (GB)**

(56) References cited:
WO-A-97/29507         GB-A- 1 302 552
US-A- 3 703 638         US-A- 4 751 391
US-A- 5 340 989

• OED A: "POSITION-SENSITIVE DETECTOR WITH
MICROSTRIP ANODE FOR ELECTRON
MULTIPLICATION WITH GASES" NUCLEAR
INSTRUMENTS & METHODS IN PHYSICS
RESEARCH, SECTION - A: ACCELERATORS,
SPECTROMETERS, DETECTORS AND
ASSOCIATED EQUIPMENT,NL,NORTH-
HOLLAND PUBLISHING COMPANY.
AMSTERDAM, vol. A263, no. 2/03, 15 January
1988 (1988-01-15), pages 351-359, XP000120274
ISSN: 0168-9002 cited in the application
• PATENT ABSTRACTS OF JAPAN vol. 011, no. 182
(E-515), 11 June 1987 (1987-06-11) -& JP 62
015746 A (TOSHIBA CORP), 24 January 1987
(1987-01-24)

**Description**

The present invention relates to improvements in proportional gas counters, such as for instance gas microstrip detectors (GMSDs). Particularly, but not exclusively, the invention provides improvements in the energy resolution of the data obtained from gas counters used in X-ray fluorescence (XRF) and X-ray absorption fine structure (XAFS) measurements.

Proportional gas counters are a well known type of gas-filled detector which rely on the phenomenon of gas amplification to amplify a charge represented by ion pairs created within the gas by the particles or radiation being detected. One important application of proportional counters is the detection of low energy X-rays in, for instance, XRF and XAFS measurements.

In XRF and XAFS the detected X-rays emitted from a sample occur as distinct lines, each element having its own distinct X-ray spectrum. Identity of the energy of the X-rays therefore gives qualitative information on the constitution of the sample whereas determination of the X-ray flux gives quantitative information. The energy resolution provided by conventional gas counters is not sufficient to distinguish between X-ray energy lines which lie close together, and thus where high energy resolution is required in materials analysis systems gas counters have largely been superseded by solid state devices such as cryogenic semiconductor (Ge or Si) detectors. Such semiconductor detectors are however relatively complex and costly to operate. These disadvantages, together with the operational flexibility of gas counters, has ensured that gas counters still have uses in some applications where high energy resolution is not required. Moreover, the recent development of the GMSD has broadened the applications of gas counters.

The GMSD was first proposed by A.OED of the Institut Laue-Langerin, France (see the article "Position Sensitive Detector with Microstrip Anode for Electron Multiplication with Gases", Nuclear Instruments and Methods in Physics Research A263 (1988) 351-359) and essentially comprises an array of fine metallic lines produced on a semiconducting glass substrate by micro-lithographic processes which replace the cathodes and wire anode of conventional gas counters. That is, the metallic lines are alternately connected to high electric potentials to form an array of inter-leaved anodes and cathodes. When an appropriate potential (typically of the order of 700V) is established between the anode and cathode strips (or groups of anode and cathode strips) in a suitable gas, the metal strips function as amplifiers of free electrons formed in the gas surrounding them. A drift cathode at a suitable distance from the electrode array (typically of the order of 10mm) defines the active gas volume. For instance, when used to detect X-rays gas gains of up to 5,000 enable individual X-rays to be detected as a pulse in an amplifier connected to either a single electrode strip or group of strips.

The GMSD has a number of advantages over traditional wire counters. All of the high-resolution gain-defining elements are located on the semiconductor substrate which is a simple component that can easily be cleaned and handled and is very simple to connect electrically. The planar geometry further simplifies operation by providing weak dependence of the gas gain on the drift electrode position. The GMSD is also capable of a very high counting rate (counting rate densities of the order of 10MHz/cm$^2$ are attainable) which is for instance necessary when the X-ray source is the intense beam provided by a synchrotron radiation source.

Thus, proportional gas counters, and GMSDs in particular, have a number of useful applications. However, the use of such detectors is still restricted by the relatively poor energy resolution which to date remains inferior to that of semiconductor detectors. The best relative pulse height resolution (FWHM/peak height) is remarkably constant for all types of proportional gas counters at around 14.5% for 5.9keV X-rays in a standard gas mixture.

It is an object of the present invention to obviate or mitigate the above disadvantages.

In accordance with the present invention , as defined in the appended claims, the output of a gas counter (such as a GMSD) operated in a wall-less mode with a stable response function can be manipulated to provide explicit enhancement of the detected spectra giving an energy resolution comparable to that of cryogenic silicon or germanium detectors. The transform $u=x^{1/2}$ (where x may, for instance, be the channel number of the pulse height analyser of the gas counter) generates a spectrum which is substantially gaussian and uniform over a wide range of detected radiation energies. This then enables the application of a conventional spectrum-enhancing algorithm to deconvolute the spectrum in u-space from which the energy and intensity of the original radiation can be determined. Furthermore, the invention provides very good energy resolution where the original detector radiation comprises more than one component at different energies. For instance, when used to detect X-ray lines, the present invention can be used to improve the energy resolution of a gas counter sufficiently to discriminate between X-rays produced by neighbouring elements of the periodic table whereas with conventional counters it is not possible to discriminate between elements of less than about 5 atomic numbers separation.

One application of the invention is in the detection of X-rays in, for instance, XRF and XAFS measurements. The invention is not, however, limited to detection of X-rays and the term "radiation" used above and in the appended claims should be interpreted broadly to include other radiation within the electromagnetic spectrum and also to include beams of particles such as neutrons. In other words, the invention may be used in any application where a proportional gas counter may be used.

The reference to a "wall-less" counter will be well understood by the skilled person and is discussed below. Similarly, the production of a pulse height spectrum which is stable, and the practical provisions which must be taken to provide a stable response (such as, for instance, keeping the gain stable and the gas clean), will be readily appreciated by the skilled person. The skilled person will also appreciate that other factors such as the particular gas used, the drift electrode potential, and the gap between the drift electrode and the design of the electrode plate could all affect the stability of the pulse height spectrum and moreover that there will be a certain degree of interdependence of these factors and the optimum operating conditions for any given counter could be determined empirically.

In accordance with the present invention it has been determined that the point spread function of the pulse height spectrum of the wall-less detector can be modelled by a log normal distribution to a high degree of accuracy. This enables very good energy resolution and quantification of the detected radiation. Moreover, when the detected radiation has two or more components of different energies, this aspect of the invention permits fitting of the amplitude and position of the overlapping pulse height distributions generated by components which are close in energy (such as closely spaced X-ray lines). As with the first aspect of the present invention, the log normal fitting can be applied to the output of any wall-less gas counter and thus can be used in any application where a gas counter may be used and the reference to radiation is to be interpreted accordingly.

The invention is particularly useful in XAFS measurements, where the qualitative composition of the sample under detection is known so that the fitting routine may be relatively straightforward and the fitted functions can be used to provide an accurate quantitative analyses of the sample. This aspect of the invention is also useful in XRF systems where a single measurement may be used to identify a number of X-ray lines which can then be quantified which is not possible with existing XRF equipment based on proportional gas counters (unless either the detected X-ray lines are well separated or filters are used and separate measurements taken to detect different lines).

The methods according to the present invention have a relatively high statistical requirement. However, GMSD's, as mentioned above, are capable of very high counting rates and therefore can readily meet the high statistical requirements. The detector in accordance with the present invention is a novel form of GMSD adapted to provide the wall-less operation required for the methods according to the present invention, but is not limited to use in such methods.

Other aspects of the present invention will be apparent from the following description in which various examples and embodiments of the invention are described, by way of example only, with reference to the accompanying drawings, in which:

Figure 1 shows the pulse height spectrum for 5.9keV MnK$_\alpha$ X-rays produced by a conventional argon-filled GMSD;
Figure 2 illustrates the pulse height spectrum for 5.9keV MnK$\alpha$ X-rays produced by a GMSD adapted for wall-less operation in accordance with the present invention;
Figure 3 is a schematic illustration of a GMSD in accordance with the present invention;
Figure 4 illustrates the pulse height spectrum of the MnK X-rays generated by the $^{55}$Fe source measured in a wall-less argon-filled GMSD in accordance with the present invention showing the log normal fits;
Figure 5 is a plot illustrating the accuracy of a log normal fit made to the spectrum of Figure 4 in accordance with the present invention in resolving the energies of the MnK lines;
Figure 6 is a plot demonstrating the ability of a log normal fitting process in accordance with the present invention to distinguish between closely spaced X-ray lines;
Figure 7 shows the spectrum obtained by transforming the results of Figure 4 into u-space in accordance with an aspect of the present invention;
Figure 8 plots the squares of the means of gaussian distributions fitted to the spectrum of Figure 7 against the X-ray line energies to demonstrate the accuracy of this aspect of the invention in resolving the energies of the MnK X-ray lines;
Figure 9 illustrates the spectrum of Figure 7 enhanced in accordance with the present invention to resolve the MnK X-ray and argon escape lines;
Figure 10 illustrates a smooth version of the enhanced spectrum of Figure 9 in comparison with the raw data of Figure 4;
Figure 11 is a plot comparing the X-ray line energies identified by the peaks in Figure 10 with the known line energies;
Figure 12 shows the u-transform of the pulse height spectrum obtained by shining Mn X-rays onto an aluminium sample housed within the active volume of a GMSD in accordance with the present invention;
Figure 13 shows a simulated pulse height distribution of 0.7keV, 1.5keV, 3keV and 6.0keV X-ray lines; and
Figure 14 shows a u-transformation of the data of Figure 13.

The different aspects of the present invention will now be described with particular reference to the detection of X-rays using a GMSD. It must be understood, however, that the invention is not limited to the detection of X-rays, nor to any particular form of gas counter.

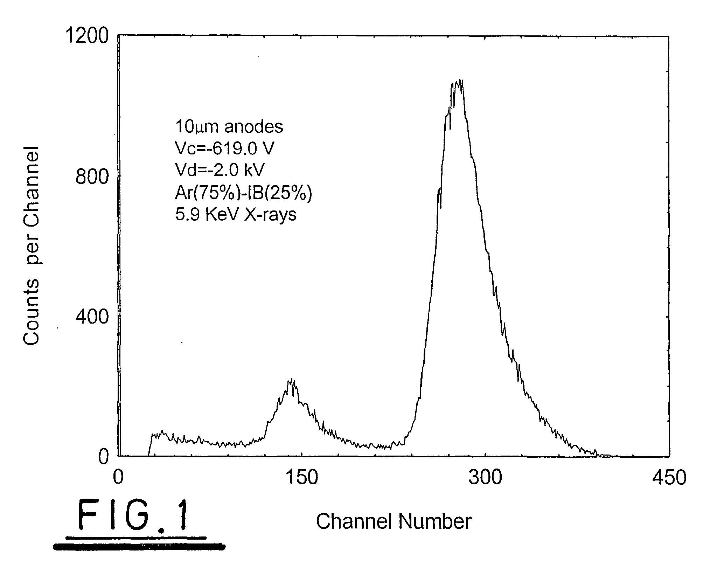

The basic processes of X-ray conversion and avalanche gain in the GMSD are essentially the same as in the traditional single wire cylindrical proportional counter. The output of a GMSD is a series of electrical pulses proportional in size to the energy of the detected X-rays which may be determined using an appropriate pulse height analyser (PHA). The detected pulses provide a pulse height spectrum (a histogram of number of pulse counts versus energy (channel number of the PHA)). Figure 1, for instance, shows the pulse height spectrum for 5.9 keV $MnK_\alpha$ X-rays in a conventional GMSD with a gas filling of argon plus 25% isobutane. The particular GMSD used in this instance had a single section detector plate (6mm wide) comprising an interleaved array of anodes and cathodes, the anodes being 10 $\mu$m in width and the cathodes being 90 $\mu$m in width with an anode-cathode gap of 100$\mu$m. The voltage across the anode and cathode pairs was 619V ($V_c$ in Figure 1) and the drift voltage was 2kV ($V_d$ in Figure 1).

From Figure 1 it can be seen that the response of the GMSD has two peaks; the full energy peak of the $K_\alpha$ X-rays and a smaller argon escape peak (the production of "escape peaks" in proportional counters is dependent upon the gas used and is well understood). The FWHM (full width half maximum) of the full energy peak is of the order of 14.5%, which is the typical value for a well constructed counter as mentioned above.

In addition to the full energy and escape peaks the detector response exhibits a low energy tail going down to zero energy, which is characteristic of all gas counters. The production of this tail is the result of "wall effects" and is well understood. Essentially, part of the electron cloud of an event may be lost by collision with the wall of the detector, or by loss from the scavenged volume of the detector, reducing the size of the corresponding detected pulse.

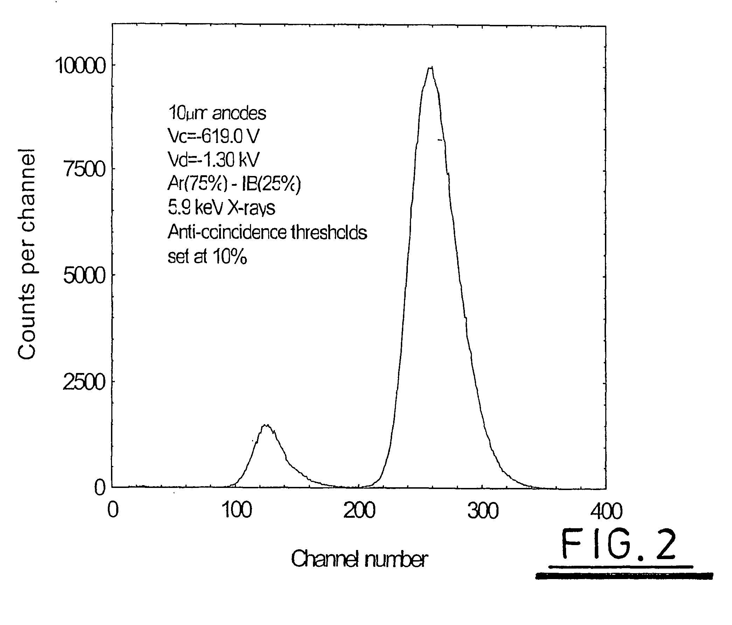

It is possible to suppress the wall effects by adapting a gas counter for socalled "wall-less" operation with the effect that the low energy tail is greatly reduced or entirely eliminated. Figure 2 illustrates the effect of wall-less operation. Although the resultant full energy peak can be expected to be much cleaner than that than would be otherwise obtained, no significant improvement in FWHM would be observed. However, according to the present invention it is possible to effectively improve the energy resolution of a wall-less detector as will be exemplified further below.

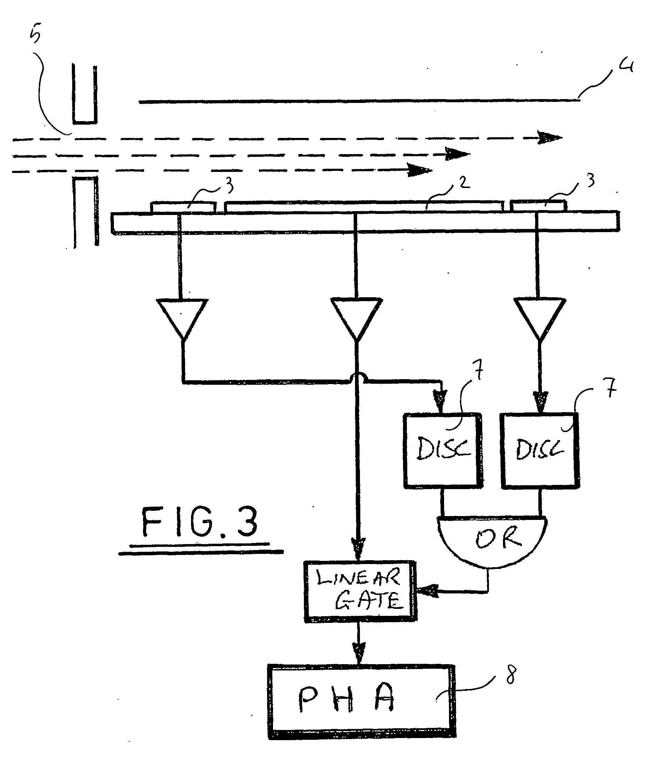

In addition to novel methods for analysing the data obtained from wall-less counters, the present invention also provides a novel GMSD adapted for wall-less operation. Figure 3 is a schematic illustration of a GMSD in accordance with the present invention. The illustrated GMSD is effectively a modification of a conventional GMSD, the basic elements of which are described above. Accordingly, no detailed description will be given of the basic GMSD structure (which may well vary widely). Rather, the modifications made to adapt the GMSD for wall-less operation in accordance with the present invention will be described.

The illustrated GMSD comprises an electrode array lithographically produced on a substrate 1. The electrode array is in three sections; a central detecting section 2 bounded by two guard sections 3. A drift electrode 4 is positioned parallel to the electrode array at a distance of about 10mm as is conventional. The GMSD is designed to receive incident radiation parallel to the electrode array through a side window or opening 5. The suppression of wall effects is achieved by two provisions; side entry of the incident radiation parallel to the electrode array and provision of the guard sections 3 and associated anti-coincidence circuitry 6.

By constructing the GMSD for side entry of incident radiation, and by sufficiently collimating the incident radiation, it is possible to very carefully control the gas volume in which the ionisation occurs to ensure that this is not very close (for instance within 1mm) to either the electrode array or the drift electrode. This suppresses the effects of an electron cloud produced by ionisation in the gas losing a portion of its charge to the electrodes.

The guard sections 3 and associated anti-coincidence circuitry are provided to veto events in which charge has been shared by the main detecting electrode section 2 and the guard sections 3 as a result of diffusion of the electron cloud during its drift towards the electrode array. The anti-coincidence circuitry incorporates two discriminators 7 which prevent shared events from reaching the PHA 8 (which may be otherwise conventional). Since any events shared between the main detecting section 2 of the electrode array and either guard section 3 will have the same time structure the anti-coincidence operation can be performed within a narrow time frame ( a few tens of nanoseconds) without inducing significant extra dead time in the counter circuit. The lower discriminator threshold in the anti-coincidence guard sections 3 of the electrode array determines how well the detected pulse height spectrum (PHS) is cleaned up. The results plotted in Figure 2 are for a GMSD in accordance with the present invention detecting Mn X-rays with the discriminator threshold set at 590eV (10% of the main peak energy). Thus, the anti-coincidence provisions of the present invention enable the elimination of loss at the edge of the main detecting section of the electrode array by rejecting shared events.

Typically, the lower discriminator threshold should not be more than about 20% of the main peak energy. For the Mn X-rays little improvement is shown if the lower threshold is dropped much below 20% of the main peak energy.

As mentioned in the introduction to this specification, to obtain good results conventional good practices should be adopted to ensure a stable response function. For instance, with one embodiment of a GMSD construction as described above the stable results are obtained using argon with 25% isobutane as the gas and a drift electrode voltage of between 1300 and 1400V.

Whereas the above described GMSD has only a single detecting section bounded by two guard sections, the detector could incorporate a number of separate detector sections formed by groups of anodes/cathodes bussed together. In this case, guard sections could be placed on either side of each particular detecting section to veto shared events.

Examples of the methods of improving the effective resolution of a gas counter that has been adapted for wall-less operation will now be described with reference to a GMSD in accordance with the invention as outlined above. It should, however, be appreciated that the methods described below are not limited to the particular arrangements described above but can be applied to any GMSD, or other proportional gas counter, that has been adapted for wall-less operation to suppress the low energy tail characteristic of gas counters and give a clean stable response.

In accordance with one aspect of the present invention the identification and quantification of X-ray lines is greatly improved in a wall-less counter by fitting the measured peak spread function (PSF) with a standard PSF, or a number of standard PSFs. Specifically, whereas conventional understanding is that the PSF of a gas counter is a normal gaussian distribution, the inventors have established that the PSF of a wall-less counter in fact has a positive skew (due to the effects of avalanche statistics, of electron loss to negative ion formation in the drift, and non-homogeneity in the electron field) and moreover that a good fit for the PSF is provided by a log normal distribution. The log normal distribution has the property of generating a positive skew dependent only on the standard deviation ($\sigma_R$) of the logarithmic transform of the pulse height spectrum. In relation to the pulse height spectrum of the counter, $\sigma_R$ represents the relative resolution (standard deviation/peak pulse height) of the PSF, a FWHM of 14.5% for instance equating to a $\sigma_R$=0.061. Indeed, extensive tests have shown that the log normal distribution appears to give a stable representation of the PSF over a practical range of bias conditions of a typical GMSD.

The principals of fitting a curve to experimental results will be very well known to the skilled person and a number of commercial fitting systems are available. For effective and practical fitting a certain amount of a priori knowledge of the system under investigation is generally required but the present invention makes such fitting possible both by recognising (and eliminating) the effects on potential fitting of the low energy tail (particularly where more than one X-ray line is contributing to the tail) and by determining the correct fitting function, i.e. log normal.

An example of the effectiveness of the fitting process will now be given in relation to the detection of MnK$\alpha$ and MnK$\beta$ X-ray lines to demonstrate the improved energy resolution achievable with the present invention. The measurements are made using a GMSD adapted for wall-less operation in the manner described above but it will be appreciated that the general principles will apply to measurements made using any wall-less gas counter.

The radioactive (internal conversion) X-ray source $^{55}$Fe yields the MnK$_\alpha$ and MnK$\beta$ X-rays at 5.9 keV and 6.49 keV respectively. The MnK lines from this source are routinely used as a convenient test stimulus for X-ray detectors. The relative intensity of the two lines can vary depending on the effect of differential absorption in the source, detector window and detector volume, but the K$\beta$ is generally found to be approximately 20% of the total rate. In a detector filled with argon, two escape peaks appear at 2.9 keV and 3.49 keV respectively due to the escape of argon K X-rays from the counter volume without conversion. This therefore provides a useful set of four X-ray lines for demonstrating the utility of the present invention.

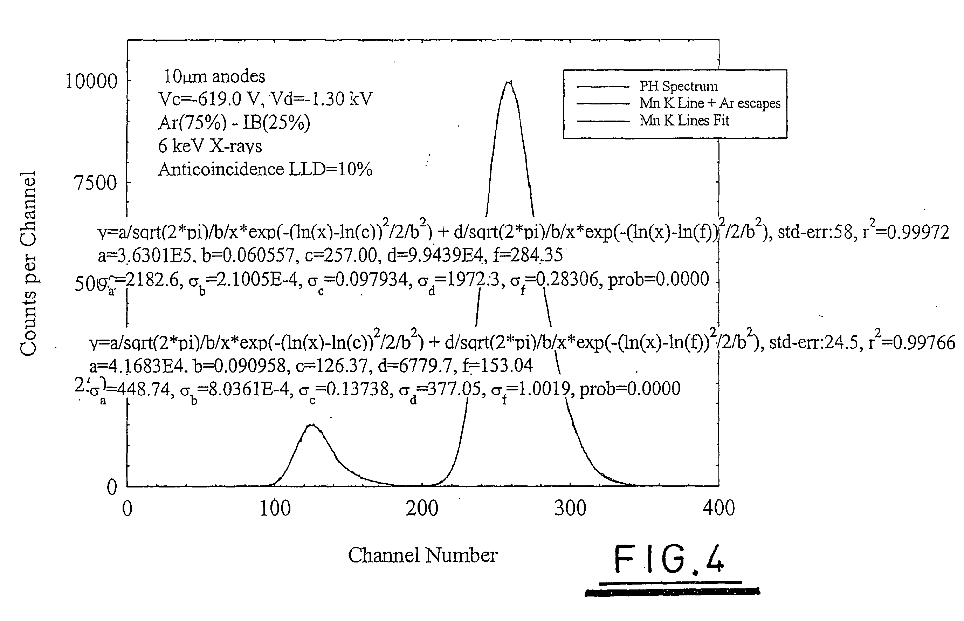

When detected in a GMSD adapted for wall-less operation the basic energy resolution of the detector is not sufficient to distinguish the two full energy peaks nor the two escape peaks. For instance, the response obtained using a wall-less GMSD (containing argon with 25% isobutane) with the anti-coincidence lower level threshold set to 10% of the main peak height is as shown in Figure 4 (the energy resolution of the GMSD being around 855eV FWHM compared with the 590eV separation in the K$_\beta$ and K$_\alpha$ energy peaks). However, the sum of two standard PSFs in the form of two log normal curves fits very well to the obtained data for the full energy peaks and a further pair of log normal distributions fit the escape peaks equally well.

The parametric form of the log normal distribution is as follows:

$$\frac{dn}{dx} = \frac{a}{\sqrt{2\pi}bx} \exp\left(\frac{(\ln(x)-\ln(c))^2}{2b^2}\right) \qquad (1)$$

A spectral line has only two innate properties, its amplitude and its energy position which may be represented in the above formula by the parameters a and c. Thus, in the above expression x is the PHA channel number, and ln(c) is the mean of the ln(x) distribution. The standard deviation of the ln(x) distribution is represented by the parameter b (which determines both the width and the skewness of the PSF).

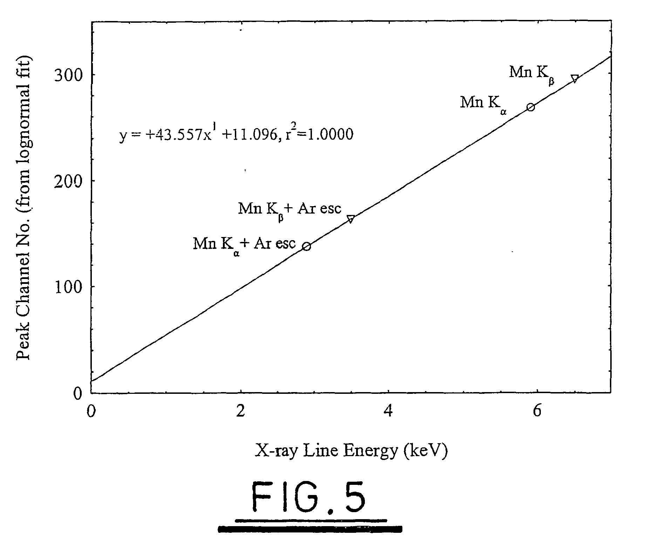

Figure 5 plots the channel positions obtained from the fits displayed in Figure 4 against the known energies of Mn lines. The K$\alpha$ peaks have the best statistics, so they are used to generate a straight line fit. It will be seen that the fitting is very accurate and all four points lie close to the straight line fit, the fitted peak channels being accurately linear with the known X-ray line energies. The relative standard deviation of the LRF was assumed to be constant over the energy span of the K$_\alpha$ and K$_\beta$ lines (0.59keV). One can allow the parameter b to fit separately to the K$_\beta$ line but no significant improvement is seen. For the K$_\alpha$ line in this example b=0.0606 giving a FWHM of 14.3%. At the escape peaks b=0.091 giving an FWHM of 21.5% which shows the typical increase of the relative PSF width as the energy decreases.

The errors dictated by the statistical noise were evaluated by the Marquart-Levenburg fitting routine which is for instance used in the implementation in the commercial EasyPlot package (produced by Spiral Software). The position errors were found to be 0.097 channels (2.2eV) in the $K_\alpha$ and 0.28 channels (6.4eV) in the $K_\beta$ lines. The amplitude errors were found to be 2183 (in $3.63 \times 10^5$) counts for the $K_\alpha$ line and 1972 (in 99439) counts in the $K_\beta$ line.

Two points emerge from the fitted parameters; the position errors (i.e. energy resolution errors) are very low whereas the amplitude errors are high compared with the Poisson errors expected from the amplitudes, i.e. 602 for $K_\alpha$ and 100 for $K_\beta$ ($\sqrt{N}$ where N is the number of counts in the line). The factor of 3.63 increase in the standard deviation of the fitted $K_\alpha$ means that 13.1 ($3.63^2$) times the number of counts must be collected to achieved the same amplitude resolution as would be achieved by a given number of events in the peak as detected by an ideal detector. The corresponding factor in the $K_\beta$ case is 389.

The ratio of the observed variance in the fitted number of counts to the Poisson value (i.e. $\sigma_N^2/N$) is known as the excess noise factor (F) and represents the factor by which the counting time must be extended to achieve the same resolution in the counts as would be achieved by an ideal detector counting N events. The excess noise factor varies with the partition fraction between the two adjacent lines and also with the ratio of the line resolution to the line spacing and increases from unity as the fraction of the counts in the peak under study and the separation of the lines decrease. Thus, the fitting process can be effectively viewed as one which transfers the position noise of the initial spectrum into amplitude noise in the fitted parameters.

The fact that the errors in $K_\alpha$ and $K_\beta$ are similar reflects the familiar problem of the noise in a small (stochastic) signal obtained by subtraction from a large one, namely that the actual error in the small signal is essentially that of the big signal. Thus, as the fraction of the smaller signal declines the error (for given counting statistics) remains constant but the signal to noise ratio in the smaller signal declines pro rata. The statistical noise multipliers, i.e. the excess noise factor (F), mentioned above are a steep function of $\sigma_E/\Delta E$, ($\sigma_E$ is the energy resolution of the PSF in keVs at the mean line position and $\Delta E$ is the energy spacing between the lines in keV) and set a limit of how close peaks can realistically be resolved.

The log normal fitting process makes it very easy to quantify the behaviour of the energy resolution as a function of the X-ray energy. Measurements of the FWHM derived in this way over a range of X-ray energies from the MnK lines and the fluorescent K lines from Rb, Mo and Ag in the same detector used above established the following relationship:

$$FWHM = \sqrt{\frac{1061.5}{E_x} + 5.14^2} \quad \% \qquad (2)$$

In the above expression $E_x$ is the X-ray line energy in keV, the $E_x^{-1/2}$ term being dictated by ionisation statistics. A constant term of 5.14% is due to the gain variation of the counter over the working area. The calibration of the PSF width can be used either to give the starting value of a three parameter fit to each peak or to remove one parameter and fit only the position and amplitude.

The above analysis essentially establishes that over a useful range of situations the overlapping pulse height distributions from adjacent X-ray lines can be separated by fitting log normal PSFs to the experimental data obtained from a wall-less counter but that the extra energy resolution is obtained at the cost of an increased statistical requirement. Statistical multipliers between 10 and 1000 should be sufficient to distinguish lines where one line is at least 10% of its neighbour and the line separation is not less than about 70% of the FWHM of the detector PSF with an energy resolution <10eV. With GMSDs the high rate capability is more than sufficient to meet the demand for extra statistics in the data set.

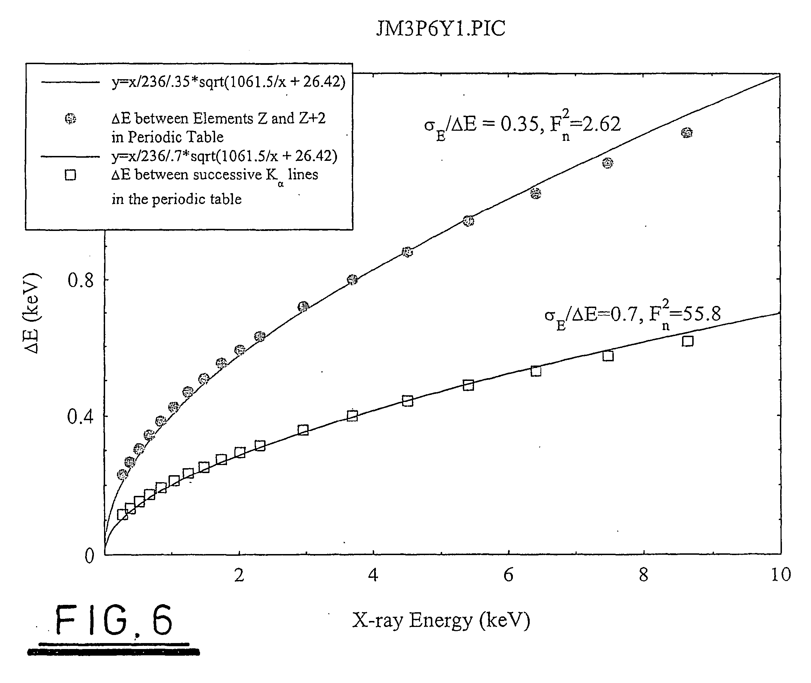

Thus, in accordance with the present invention the PSF of a proportional counter can be modelled to a high degree of accuracy by a log normal distribution which permits fitting of the amplitude and position of overlapping pulse height distributions generated by closely spaced X-ray lines. One example of the possible application of this technique is to X-ray fluorescent analysis (XFA) in which the ultimate requirement is usually to resolve the K lines of adjacent elements. Examining the separation between the K$\alpha$ energies ($E_k$, $E_{k+1}$) of adjacent elements (neglecting the presence of the $K_\beta$ lines) it is found that the separation increases approximately as $E_k^{1/2}$. The energy width of the PSF ($\sigma_E$) has a similar dependence on $E_x$ so that in the case of adjacent K lines the parameter $\alpha = \sigma_E/\Delta_E$ which determines the "separability" of lines is approximately constant. Figure 6 plots $\Delta_E$ against X-ray energy for a series of elements and shows that in the case of adjacent elements the results fall accurately on the line ($\Delta E$ v E) corresponding in this case to $\alpha$=0.7. Taking the statistical multiplier of the K$\alpha$, in MnK lines as a guide indicates that a factor of 56 more counts (than the Poisson number) is required to get the Poisson accuracy. The second line in Figure 6 shows that for elements two units of atomic number apart the statistical requirement relaxes to a factor of 2.6.

The skilled person will appreciate many other applications in which the fitting process in accordance with the above aspect of the present invention may be used to improve the energy resolution adequately for many different circumstances. However, in situations where the detected spectrum does not consist chiefly of lines, or if the lines are completely unknown, fitting becomes difficult if not impossible. The inventors however have established that the stable PSF of a wall-less detector can be used more generally in an enhancement algorithm which can process the measured pulse height spectrum and deliver the equivalent spectrum of a pseudo-detector with improved energy resolution comparable to that of current solid state detectors. The inventors have, for instance, established a method for identifying unknown X-ray lines which can then, if required, be quantified accurately by subsequently fitting log normal distributions to the raw data in the manner described above.

It is not practical to attempt to apply conventional spectrum enhancement methods and algorithms to the raw data obtained even from a wall-less counter. The main problem is that the PSF of an X-ray line in a counter such as a GMSD is a function of the line energy. This is not particularly problematical where a simple fitting is attempted as described above but it does impose an impractical computing demand on a spectrum enhancement algorithm.

Thus, in accordance with a further aspect of the present invention the data obtained from a wall-less counter can be enhanced following an initial transformation of the raw data to produce a PSF which is substantially position invariant. That is, the energy (or channel number of the PHA), which is an independent variable, is transformed to $u=x^{1/2}$ (where x is the energy or channel number). This is called the U-transform. The normalisation of the line distributions is assured by making the transformation of the ordinates of the pulse height spectrum according to the relation dn/du (=2udn/dx). The resultant transformed PSF is substantially independent of line position and can thus be de-convolved to enhance the spectrum.

In particular the inventors have established that the fitting function for the curves in u-space are normal gaussian curves rather than log normal curves. This is a consequence of the properties of the original log normal curve under U-transformation, the initial log normal curve simply changing into another log normal curve with the width simply halved. It is easy to show that a log normal curve asymptotically approaches a normal form as the width tends to 0 (since the skewness and width of a log normal curve are specified by the same parameter). Thus, the U-transformation automatically symetrisises the PSF.

Examples are now presented to demonstrate the utility of the U-transform.

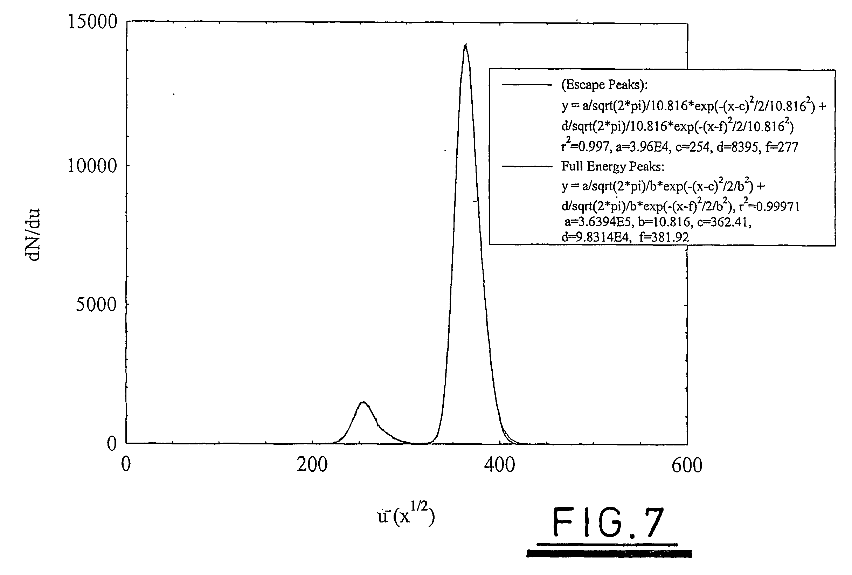

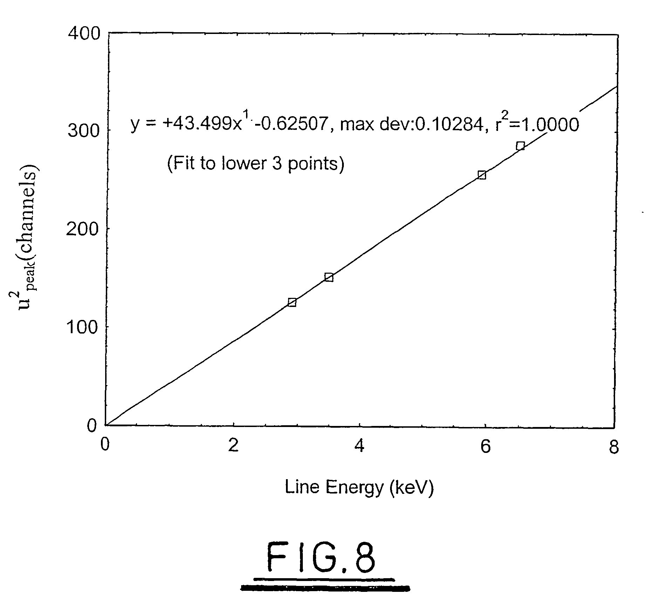

It is now possible to fit the Mn x-ray lines with gaussian PSFs as shown in figure 7. The amplitudes obtained for the $K_\alpha$ and $K_\beta$ lines agree very well (within 1%) with those obtained in x-space with the log normal fit (using the procedure described above). When the squares of the means of the gaussian distributions fitted to the U-transform are plotted against the known X-ray line energies an excellent straight line is obtained as is shown in Figure 8.

Figure 7 shows the data of Figure 4 plotted in u-space. Having reduced the spectrum to a constant gaussian function the task of de-convoluting it to uncover the underlying spectrum becomes much easier. A number of different spectrum enhancement algorithms are commercially available based on a variety of techniques such as, for example, maximum entropy, maximum likelihood, and simulated annealing. These will all be well known to the skilled person. In this example the deconvolution was performed using a readily available simulated annealing algorithm (with a uniform normal PSF).

The simulated annealing algorithm was used in this example simply because the relevant software was available. The algorithm is derived from the ideas developed in the article in Science 220 (1983) pages 671-680, S Kirkpatrick, CD Gelatt and M P Vecci. A target distribution (the final solution) is generated by adding or subtracting a small "grain" randomly across the field. The grain is chosen to be a small fraction of the maximum amplitude in the input distribution (i.e. the raw data), typically 1%. After each addition the target distribution is convolved with the known X-ray line response function and a "potential" generated from the sum of the squares of the differences between the convolved target distribution and the input distribution. Minimising this potential yields a target distribution which when convolved with the line response function matches the raw data. In the ideal case this process would yield a series of delta functions for any given X-ray line pulse height spectrum.

The minimisation of the potential is achieved by rejecting any grain which increases its value. Since the process can easily be trapped in a local minimum (especially in the early stages) positive excursions of the potential are permitted on a random basis controlled by a Boltzman factor which is characterised by a "temperature". As grains are added (and discarded) this "temperature" is periodically reduced to restrict the positive excursions. This is the "annealing" concept which ensures a smooth decline of the potential and the conversions of the target distribution to a stable solution. Convergence is further aided by reducing the grain size as the process proceeds. (For the X-ray spectra under study the number of grains used is typically $10^6$ or more. The program was written in complied BASIC and runs $10^6$ grains in about 1 minute on a Celeron 433 MHz pc.)

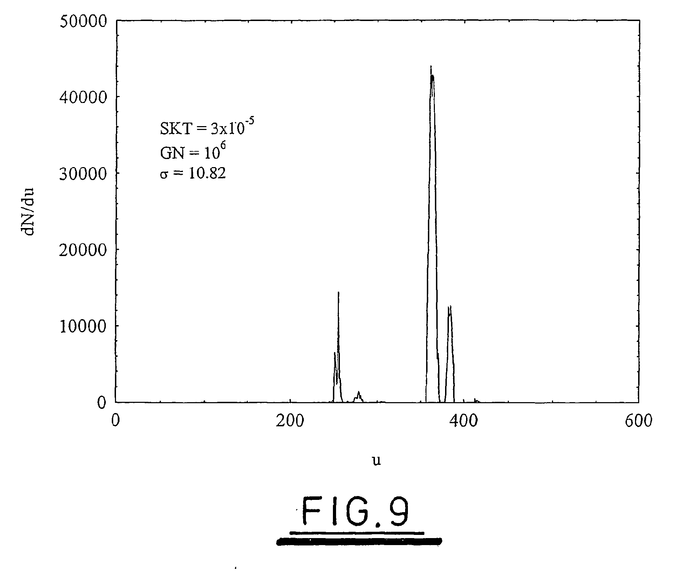

The enhanced output of the simulated annealing program in response to the u spectrum shown in Figure 7, (i.e. using the gaussian response functions derived from the fit in Figure 7), is shown in Figure 9. The four lines of the MnK radiation in an argon-filled detector are clearly resolved. The number of grains is $10^6$ and the initial "temperature" is $3 \times 10^{-5}$ the high frequency statistical noise present in the peaks is an artefact caused by the "freezing in" of the poor statistics at the beginning of the annealing process. This is different each time it is run and is much reduced by averaging the results of a number of runs (for instance eight replicates seem to work very well). Alternatively, because the frequency of the noise is high, the data could be smoothed with a gaussian distribution of about half the width of the enhanced peaks. This gives noise-free data with little sacrifice of resolution.

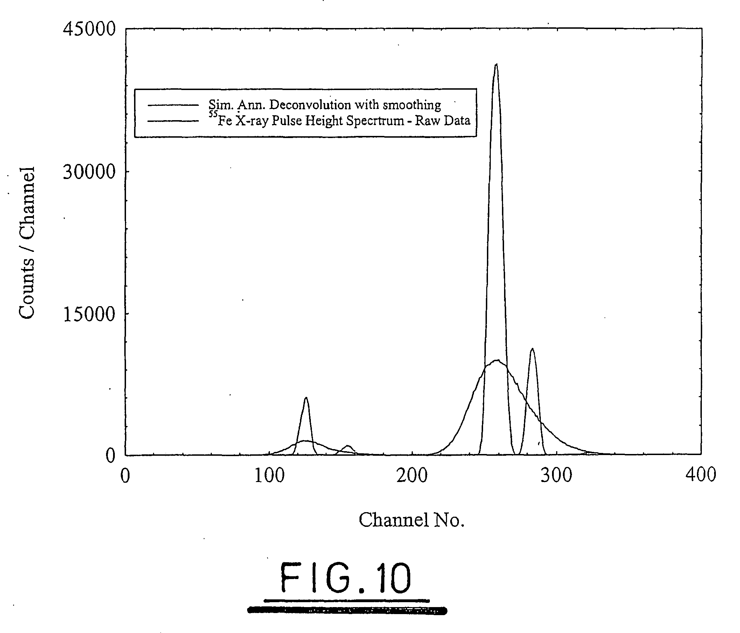

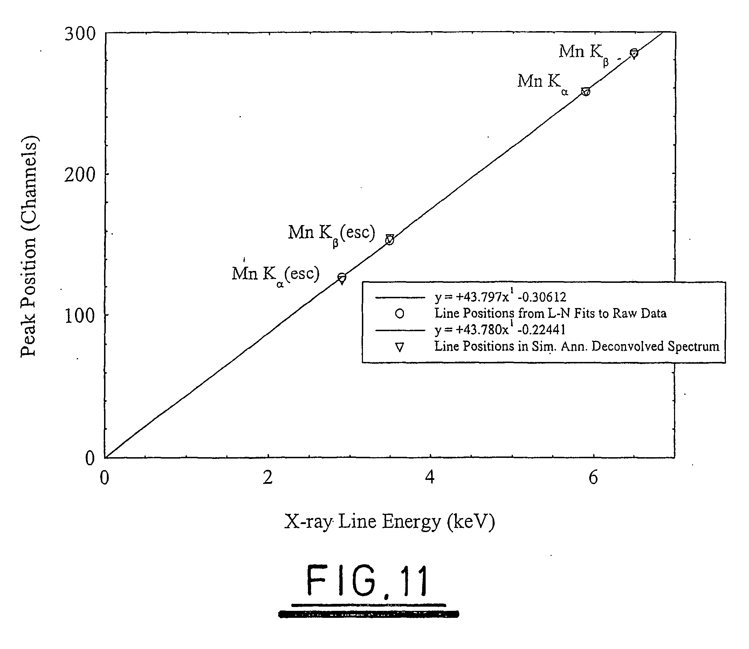

Figure 10 shows the smoothed version of Figure 9, transformed back into x-space (i.e. PHA channels) and compared with the raw data of Figure 4. The energy resolution of the lines produced by the algorithm is 239 eV (FWHM) which compares with 842 eV for the K$\alpha$ line in the original data. A further improvement is that in the enhanced spectrum the width of the peaks is essentially independent of energy. Comparing the line positions identified by the peaks in Figure 10 with the known line energies shows they are proportional and agree well with the values obtained from the log normal of fits, as shown in Figure 11.

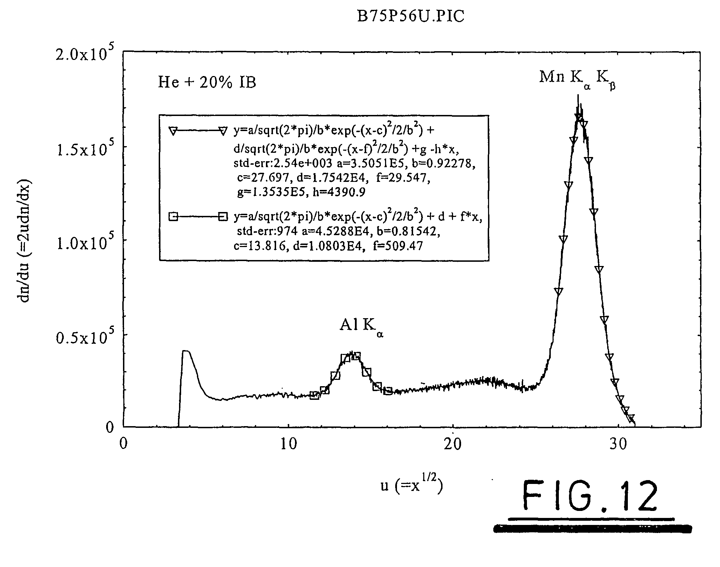

Figure 12 shows the U-transform of the pulse height spectrum obtained by shining Mn X-rays onto an aluminium sample housed within the active volume of the detector. The lines present are the MnK X-rays and the A1K X-ray. The plateau of counts arises from the detection of the photo electrons and augers from the A1 surface. From the analyses given above the width of the A1 peak prior to transformation should be about 50% of the width of the Mn peak. Figure 12, however, shows that following u transformation the peaks have only a 10% width difference. The 10% discrepancy can be accredited to the plate gain variation which upsets the ideal energy dependence of the standard deviation of the point spread function.

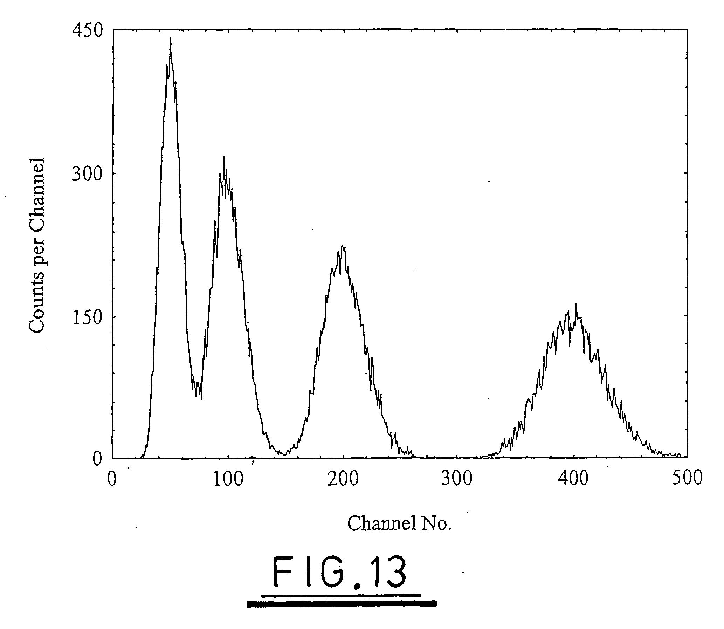

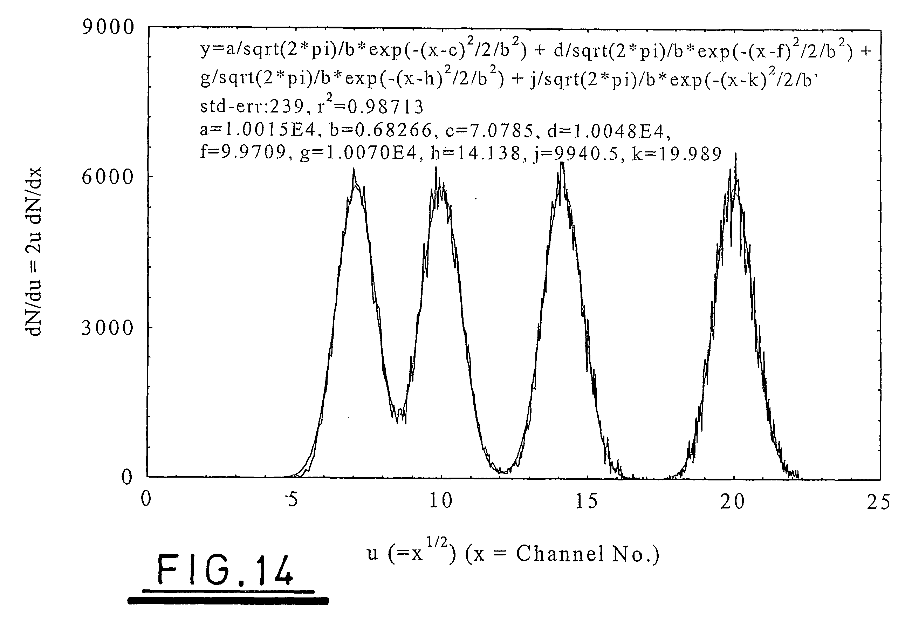

Referring now to Figure 13 this shows simulated pulse height distributions of a GMSD in response to X-ray lines at 0.75 keV, 1.5 keV, 3 keV and 6.0 keV. The simulation was done with a Monte Carlo program giving $10^4$ events in each line. The energy resolution of the detector is determined by the relation FWHM = 39.3 $E_x^{-1/2}$% which is typical of gas counters. This translates to a $\sigma_R$ = 0.166 $Ex^{-1/2}$ (b in the log normal equation given above) and $\sigma_x$ = 0.166 $E_x^{1/2}$ keV. This again demonstrates the effect of the energy dependence of the resolution in making the X-ray lines of the same intensity appear very different. A U-transformation of this data is shown in Figure 14 from which it can be seen that the line distributions in u-space are of substantially the same width and amplitude. Making the transformation to the variable $u = x^{1/2}$, it is noted that a step in u-space $du=1/2 \, x^{1/2}dx$. If dx is the width of the X-ray pulse height spectrum it is seen that $\sigma_u = 1/2X^{-1/2} \sigma_x$. However, $\sigma_x = k \, x^{1/2}$ (where k is a constant) so that $\sigma_u = k/2$ and is independent of the X-ray energy. Once again the normalisation of the line distributions is assured by making the transformation of the ordinates of the pulse height spectrum according to the relation dn/du = 2udn/du.

As with the above examples, the transformed peaks can be closely approximated by a gaussian function of constant width so that a spectrum enhancing algorithm can be applied. Fitting the four peaks of Figure 14 to a sum of four gaussian functions with the same standard deviation provides a very close fit with peak areas fitting to $10^4$ counts with errors of less than 1%. When squares of the means of the fitted distribution means are plotted against the input energies a perfect straight line is obtained.

## Claims

1.  A method of identifying radiation detected in a wall-less proportional gas counter providing a stable pulse height spectrum, the method comprising:

    i) correcting for the effect of positive skew of the detected pulse height spectrum; and
    ii) determining the energy (or energies) and/or the intensity (or intensities) of the detected radiation.

2.  A method according to claim 1, wherein the correction comprises:

    i) transforming the detected pulse height spectrum (dn/dx) in accordance with the transform $u=x^{1/2}$ where x represents the energy of the detected pulses in the original pulse height spectrum;
    ii) generating a normalised spectrum in u-space comprising a representation of dn/du as a function of u, where n is the detected pulse count as a function of x; and
    iii) deconvoluting the normalised spectrum in u-space to enhance the spectrum; the energy (or energies) and/or the intensity (or intensities) of the detected radiation being determined from the enhanced spectrum.

3.  A method according to claim 2, wherein for the step of deconvolution of the spectrum in u-space the spectrum is treated as a normal gaussian distribution.

4.  A method according to claim 3, wherein said deconvolution is performed using one of a number of conventional spectrum enhancement methods including simulated annealing, maximum entropy and maximum likelihood.

5.  A method according to claim 1, wherein the correction comprises:

    i) transforming the detected pulse height spectrum in accordance with the transform $u=x^{-1/2}$ where x represents the energy of the detected pulses in the original pulse height spectrum;

ii) generating a normalised spectrum in u-space comprising a representation of dn/du as a function of u, where n is the detected pulse count as a function of x ; and

iii) modelling the normalised spectrum in u-space by fitting one or more standard distribution function (or the sum of more than one standard distribution function) to die spectrum; the energy (or energies) and/or intensity (or intensities) of the detected radiation being determined from the best fit distribution (or distributions).

**6.** A method according to claim 5, wherein the standard distributions are normal gaussian distributions.

**7.** A method according to claim 5, wherein the standard distributions used to model the spectrum are log normal distributions.

**8.** A method according to claim 1, wherein the correction comprises:

i) fitting a log normal distribution function (or the sum of more than one log normal function) to the pulse height spectrum produced by the counter, the energy (or energies) and/or intensity (or intensities) of the detected radiation being determined from the best fit log normal distribution (or distributions).

**9.** A method according to claim 9, wherein the parametric form of the log normal distribution is used in accordance with the formula:

$$\frac{dn}{dx} = \frac{a}{\sqrt{2\pi b x}} \exp\left( \frac{\ln(x) - \ln(c))^2}{2b^2} \right)$$

where:

dn/dx is the histogram of pulse counts as a function of x;
x represents the energy of each detected pulse;
ln(c) is the mean of the ln(x) distribution; and
b represents the standard deviation of the ln(x) distribution.

**10.** A method of detecting X-rays, the method comprising using a wall-less proportional gas counter to detect the X-rays and producing a pulse height spectrum representative of the detected radiation energies and intensities and resolving the spectrum to identify the energy (or energies) and/or intensity (or intensities) of the detected radiation using a method according to any one of claims 1 to 9.

**11.** A method of conducting X-ray fluorescence measurements, wherein X-ray radiation is detected in accordance with the method of claim 10.

**12.** Apparatus for detecting radiation comprising a proportional gas counter adapted for wall-less operation and production of a stable pulse height spectrum representative of the detected radiation, and further comprising means for performing the step or steps of a method according to any one of claims 1 to 11.

**13.** Apparatus according to claim 12, wherein said proportional gas counter is a gas microstrip detector comprising;

an array of interleaved anodes and cathodes defined on a substantially flat substrate thereby forming a substantially planar detector plate;
a substantially planar drift electrode (4) parallel to the detection plate, the drift electrode (4) and detection plate being spaced apart to define a gas volume therebetween;
an aperture or window (5) for admitting incident radiation into said gas volume in a direction parallel to the detection plate;

wherein the detection plate is divided into at least one detector section bounded by a respective guard section (3) on each side of the detector section in said direction of incident radiation, and electronic means (6, 7, 8) associated with the guard section to exclude events shared between the detector section and either guard section.

**14.** A detector according to claim 13 wherein said means for excluding shared events comprises discriminating circuitry (7) which excludes guard section events below a predetermined threshold energy.

**15.** A detector according to claim 14, wherein said threshold energy is determined as a proportion of the energy of the peak energy of the detected radiation.

**16.** A detector according to claim 15, wherein said threshold energy is less than or equal to 20% of the peak energy of the detected radiation.

**17.** Apparatus according to claim 12 or 13, adapted for detection of X-rays for performance of X-ray fluorescence or X-ray fine structure measurements.

**Patentansprüche**

**1.** Verfahren zum Identifizieren von Strahlung, die in einem wandlosen Proportionalgaszähler erfasst wird, der ein stabiles Impulsböhenspektrum erzeugt, wobei das Verfahren die folgenden Schritte umfasst:

i) Korrigieren des Effekts einer positiven Schrägung des erfassten Imputshöhenspektrums; und
ii) Ermitteln der Energie(n) und/oder Intensität(en) der erfassten Strahlung.

**2.** Verfahren nach Anspruch 1, wobei die Korrektur Folgendes beinhaltet:

i) Transformieren des erfassten Impulshöhenspektrums (dn/dx) in Übereinstimmung mit der Transformationsgleichung $u=x^{1/2}$, wobei x die Energie der erfassten Impulse im ursprünglichen Impulshöhenspektrum repräsentiert;
ii) Erzeugen eines normalisierten Spektrums im u-Rauzn, das eine Repräsentation von dn/du in Abhängigkeit von u umfasst, wobei n die erfasste Impulszahl in Abhängigkeit von x ist; und
iii) Entfalten des normalisierten Spektrums im u-Raum zum Vergrößern des Spektrums; wobei die Energie(n) und/oder Intensität(en) der erfassten Strahlung von dem vergrößerten Spektrum aus ermittelt werden.

**3.** Verfahren nach Anspruch 2, wobei für den Schritt des Entfaltens des Spektrums im u-Raum das Spektrum als normale Gaußsche Verteilung behandelt wird.

**4.** Verfahren nach Anspruch 3, wobei das Entfalten mit einer aus einer Reihe herkömmlicher Spektmmsvergrößerungsmethoden einschließlich eines simulierten Glühens, einer Maximum-Entropie und einer Maximum-Wahrscheinlichkeit ausgeführt wird.

**5.** Verfahren nach Anspruch 1, wobei die Korrektur Folgendes beinhaltet:

i) Transformieren des erfassten Impulshöhenspektrums mit der Transformationsgleichung $u=x^{1/2}$, wobei x die Energie der erfassten Impulse im ursprünglichen Impulshöhenspektrum repräsentiert;
ii) Erzeugen eines normalisierten Spektrums im u-Raum, das eine Darstellung von dn/du in Abhängigkeit von u umfasst, wobei n die erfasste Impulszahl in Abhängigkeit von x ist; und
iii) Modellieren des normalisierten Spektrums im u-Raum durch Anpassen einer oder mehrerer Standardverteilungsfunktion(en) (oder der Summe von mehr als einer Standardvarteilungsfunktion) an das Spektrum; wobei die Energie(n) und/oder Intensität(en) der erfassten Strahlung von der Best-Fit-Verteilung(en) aus ermittelt wird/werden.

**6.** Verfahren nach Anspruch 5, wobei die Standardverteilungen normale Graußschc Verteilungen sind.

**7.** Verfahren nach Anspruch 5, wobei die zum Modellieren des Spektrums verwendeten Standardverteilungen Log-Normal-Verteilungen sind.

**8.** Verfahren nach Anspruch 1, wobei die Korrektur Folgendes beinbaltet:

i) Anpassen einer Log-Normal-Verteilungsfunktion (oder der Summe von mehr als einer Log-Normal-Funktion) an das vom Zähler produzierte Impulshöhenspektrum, wobei die Energie(n) und/oder Intensität(en) der erfassten Strahlung von der Best-Fit-Log-Normal-Verteilung(en) aus ermittelt wird/werden.

9. Verfahren nach Anspruch 8, wobei die parametrische Form der Log-NormalVerteilung gemäß der folgenden Formel verwendet wird:

$$\frac{dn}{dx} = \frac{a}{\sqrt{2\pi}bx} \exp\left(\frac{(ln(x) - ln(c))^2}{2b^2}\right)$$

wobei:

dn/dx das Histogramm von Impulszahlen in Abhängigkeit von x ist;
x die Energie jedes erkannten Impulses repräsentiert;
ln(c) das Mittel der ln(x) Verteilung ist; und
b die Standardabweichung der ln(x) Verteilung repräsentiert.

10. Verfahren zum Erfassen von Röntgenstrahlen, wobei das Verfahren die Verwendung eines wandlosen Proportionalgaszählers zum Erfassen der Röntgenstrahlen und das Produzieren eines Impulshöhenspektrums, das für die erfassten Strahlungsenergien und intensitäten repräsentativ ist, und das Auflösen des Spektrums zum Identifizieren der Energie(n) und/oder Intensität(en) der erfassten Strahlung mit einem Verfahren nach einem der Ansprüche 1 bis 9 beinhaltet.

11. Verfahren zum Durchführen von Röntgenfluoreszenzmessungen, wobei Röntgenstrahlung mit dem Verfahren nach Anspruch 10 erfasst wird.

12. Vorrichtung zum Erkennen von Strahlung, die einen Proportionalgaszähler umfasst, der für einen wandlosen Betrieb und die Produktion eines für die erfasste Strahlung repräsentativen stabilen Impulshöhenspektrums geeignet ist, und die Ferner Mittel zum Ausführen des/der Schritte(s) eines Verfahrens nach einem der Ansprüche 1 bis 11 umfasst.

13. Vorrichtung nach Anspruch 12, wobei der Proportionalgaszähler ein Gas-Mikrostreifen-Detektor ist, der Folgendes umfasst:

eine Anordnung von verschachtelten Anoden und Kathoden, die auf einem im Wesentlichen flachen Substrat definiert sind, wodurch sich eine im Wesentlichen planare Detektorplatte bildet;
eine im Wesentlichen planare Driftelektrode (4) parallel zu der Erfassungsplatte, wobei die Driftelektrode (4) und die Erfassungsplatte so voneinander beabstandet sind, dass ein Gasvolumen dazwischen definiert wird;
eine Öffnung oder ein Fenster (5) zum Einlassen von einfallender Strahlung in das Gasvolumen in einer Richtung parallel zu der Erfassungsplatte;

wobei die Erfassungsplatte in wenigstens einen Detektorteil, der von einem jeweiligen Schutzteil (3) auf jeder Seite des Detektorteils in der Strahlungseinfallsrichtung begrenzt wird, und Elektronikmittel (6, 7, 8) in Verbindung mit dem Schutzteil unterteilt ist, um Events auszuschließen, die dem Detektorteil und jedem der Schutzteile gemeinsam sind.

14. Detektor nach Anspruch 13, wobei das Mittel zum Ausschließen gemeinsamer Events eine Unterscheidungsschaltung (7) umfasst, die Schutzteilevents unterhalb einer vorbestimmten Schwellenenergie ausschließt.

15. Detektor nach Anspruch 14, wobei die Schwellenenergie als ein Energicanteil der Spitzenenergie der erfassten Strahlung ermittelt wird.

16. Detektor nach Anspruch 15, wobei die Schwellenenergie gleich oder kleiner als 20% der Spitzenenergie der erfassten Strahlung ist.

17. Vorrichtung nach Anspruch 12 oder 13, die für das Erfassen von Röntgenstrahlen zum Durchführen von Röntgenfluoreszenz- oder Röntgenfeinstrukturmessungen geeignet ist.

**Revendications**

**1.** Procédé d'identification d'un rayonnement qui est détecté dans un compteur de gaz proportionnel sans paroi assurant un spectre de hauteurs d'impulsion stable, le procédé comprenant:

i) la correction quant à l'effet d'une inclinaison positive du spectre de hauteurs d'impulsion détecté; et
ii) la détermination de l'énergie (ou des énergies) et/ou de l'intensité (ou des intensités) du rayonnement détecté.

**2.** Procédé selon la revendication 1, dans lequel la correction comprend:

i) la transformation du spectre de hauteurs d'impulsion détecté (dn/dx) conformément à la transformation u=x$^{1/2}$ où x représente l'énergie des impulsions détectées dans le spectre de hauteurs d'impulsion original;
ii) la génération d'un spectre normalisé dans un espace u comprenant une représentation de dn/du en fonction de u où n est le comptage d'impulsions détecté en fonction de x; et
iii) la déconvolution du spectre normalisé dans l'espace u afin d'améliorer le spectre; l'énergie (ou les énergies) et/ou l'intensité (ou les intensités) du rayonnement détecté étant déterminées à partir du spectre amélioré.

**3.** Procédé selon la revendication 2, dans lequel, pour l'étape de déconvolution du spectre dans l'espace u, le spectre est traité en tant que distribution gaussienne normale.

**4.** Procédé selon la revendication 3, dans lequel ladite déconvolution est réalisée en utilisant un parmi un certain nombre de procédés d'amélioration de spectre classiques incluant un recuit simulé, une entropie maximum et une probabilité maximum.

**5.** Procédé selon la revendication 1, dans lequel la correction comprend:

i) la transformation du spectre de hauteurs d'impulsion détecté conformément à la transformation u=x$^{-1/2}$ où x représente l'énergie des impulsions détectées dans le spectre de hauteurs d'impulsion original;
ii) la génération d'un spectre normalisé dans l'espace u comprenant une représentation de dn/du en fonction de u, où n est le comptage d'impulsions détecté en fonction de x; et
iii) la modélisation du spectre normalisé dans l'espace u en ajustant une ou plusieurs fonctions de distribution standards (ou la somme de plus d'une fonction de distribution standard) sur le spectre; l'énergie (ou les énergies) et/ou l'intensité (ou les intensités) du rayonnement détecté étant déterminées à partir de la distribution (ou des distributions) de meilleur ajustement.

**6.** Procédé selon la revendication 5, dans lequel les distributions standards sont des distributions gaussiennes normales.

**7.** Procédé selon la revendication 5, dans lequel les distributions standards utilisées pour modéliser le spectre sont des distributions normales logarithmiques.

**8.** Procédé selon la revendication 1, dans lequel la correction comprend:

i) l'ajustement d'une fonction de distribution normale logarithmique (ou de la somme de plus d'une fonction normale logarithmique) sur le spectre de hauteurs d'impulsion qui est produit par le compteur, l'énergie (ou les énergies) et/ou l'intensité (ou les intensités) du rayonnement détecté étant déterminées à partir de la distribution (ou des distributions) normale logarithmique de meilleur ajustement.

**9.** Procédé selon la revendication 8, dans lequel la forme paramétrique de la distribution normale logarithmique est utilisée conformément à la formule:

$$\frac{dn}{dx} = \frac{a}{\sqrt{2\pi bx}} \exp\left(\frac{(\ln(x) - \ln(c))^2}{2b^2}\right)$$

dans laquelle:

dn/dx est l'histogramme des comptages d'impulsion en fonction de x;

x représente l'énergie de chaque impulsion détectée;

ln(c) est le moyen de la distribution ln(x); et

b représente la déviation standard de la distribution ln(x).

10. Procédé de détection de rayons X, le procédé comprenant l'utilisation d'un compteur de gaz proportionnel sans paroi pour détecter les rayons X et pour produire un spectre de hauteurs d'impulsion qui est représentatif des énergies de rayonnement détectées et des intensités afférentes et la résolution du spectre afin d'identifier l'énergie (ou les énergies) et/ou l'intensité (ou les intensités) du rayonnement détecté en utilisant un procédé selon l'une quelconque des revendications 1 à 9.

11. Procédé de mise en oeuvre de mesures de fluorescence rayons X, dans lequel un rayonnement de rayons X est détecte conformément au procédé de la revendication 10.

12. Appareil pour détecter un rayonnement comprenant un compteur de gaz proportionnel qui est adapté pour un fonctionnement sans paroi et une production d'un spectre de hauteurs d'impulsion stable représentatif du rayonnement détecté, et comprenant en outre un moyen pour réaliser l'étape ou les étapes d'un procédé selon l'une quelconque des revendications 1 à 11.

13. Appareil selon la revendication 12, dans lequel ledit compteur de gaz proportionnel est un détecteur microbande de gaz comprenant:

un réseau d'anodes et de cathodes entrelacées défini sur un substrat sensiblement plat, entraînant la formation d'une plaque de détecteur sensiblement plane;

une électrode de dérive sensiblement plane (4) qui est parallèle à la plaque de détection, l'électrode de dérive (4) et la plaque de détection étant espacées de manière à définir un volume de gaz entre elles;

une ouverture ou fenêtre (5) pour admettre un rayonnement incident dans ledit volume de gaz suivant une direction qui est parallèle à la plaque de détection,

dans lequel la plaque de détection est divisée en au moins une section de détecteur qui est délimitée par une section de garde respective (3) sur chaque côté de la section de détecteur suivant ladite direction de rayonnement incident, et un moyen électronique (6, 7, 8) associé à la section de garde de manière à exclure des événements partagés entre la section de détecteur et chacune des sections de garde.

14. Détecteur selon la revendication 13, dans lequel ledit moyen pour exclure des événements partagés comprend un circuit de discrimination (17) qui exclut des événements de section de garde au-dessous d'une énergie de seuil prédéterminée.

15. Détecteur selon la revendication 14, dans lequel ladite énergie de seuil est déterminée en tant que proportion de l'énergie de crête du rayonnement détecté.

16. Détecteur selon la revendication 15, dans lequel ladite énergie de seuil est inférieure ou égale à 20% de l'énergie de crête du rayonneznent détecté.

17. Appareil selon la revendication 12 ou 13, adapté pour la détection de rayons X pour la réalisation de mesures de fluorescence de rayons X ou de structure fine de rayons X.

10μm anodes
Vc=-619.0 V
Vd=-2.0 kV
Ar(75%)-IB(25%)
5.9 KeV X-rays

Counts per Channel

Channel Number

# FIG.1

EP 1 287 382 B1

FIG. 2

Counts per channel

Channel number

10μm anodes
Vc=-619.0 V
Vd=-1.30 kV
Ar(75%) - IB(25%)
5.9 keV X-rays
Anti-coincidence thresholds
set at 10%

FIG.3

Counts per Channel

10000

7500

5000

2500

0

10µm anodes
Vc=-619.0 V, Vd=-1.30 kV
Ar(75%) - IB(25%)
6 keV X-rays
Anticoincidence LLD=10%

PH Spectrum
Mn K Line + Ar escapes
Mn K Lines Fit

$y=a/\text{sqrt}(2*pi)/b/x*\exp(-(\ln(x)-\ln(c))^2/2/b^2) + d/\text{sqrt}(2*pi)/b/x*\exp(-(\ln(x)-\ln(f))^2/2/b^2)$, std-err:58, $r^2$=0.99972
a=3.6301E5, b=0.060557, c=257.00, d=9.9439E4, f=284.35
$\sigma_a$=2182.6, $\sigma_b$=2.1005E-4, $\sigma_c$=0.097934, $\sigma_d$=1972.3, $\sigma_f$=0.28306, prob=0.0000

$y=a/\text{sqrt}(2*pi)/b/x*\exp(-(\ln(x)-\ln(c))^2/2/b^2) + d/\text{sqrt}(2*pi)/b/x*\exp(-(\ln(x)-\ln(f))^2/2/b^2)$, std-err:24.5, $r^2$=0.99766
a=4.1683E4, b=0.090958, c=126.37, d=6779.7, f=153.04
$\sigma_a$=448.74, $\sigma_b$=8.0361E-4, $\sigma_c$=0.13738, $\sigma_d$=377.05, $\sigma_f$=1.0019, prob=0.0000

0        100        200        300        400

Channel Number

FIG.4

FIG.5

FIG.6

FIG.7

$y = +43.499x^1 - 0.62507$, max dev:0.10284, $r^2 = 1.0000$

(Fit to lower 3 points)

FIG.8

FIG.9

FIG.10

FIG.11

FIG.12

EP 1 287 382 B1

FIG.13

$$y=a/sqrt(2*pi)/b*exp(-(x-c)^2/2/b^2) + d/sqrt(2*pi)/b*exp(-(x-f)^2/2/b^2) +$$
$$g/sqrt(2*pi)/b*exp(-(x-h)^2/2/b^2) + j/sqrt(2*pi)/b*exp(-(x-k)^2/2/b'$$

std-err:239, $r^2$=0.98713
a=1.0015E4, b=0.68266, c=7.0785, d=1.0048E4,
f=9.9709, g=1.0070E4, h=14.138, j=9940.5, k=19.989

FIG.14

u (=$x^{1/2}$) (x = Channel No.)

EP 1 287 382 B1